# EUROPÄISCHE PATENTANMELDUNG

(11) **EP 2 228 585 A2**
(43) Veröffentlichungstag der Anmeldung: **15.09.2010**
(21) Anmeldenummer: 10002591.5
(22) Anmeldetag: 12.03.2010
(51) Int. Cl.: F16M 11/24

(54) **Aufnahmeeinheit für ein Video-Zentriersystem**

(30) Priorität: 12.03.2009 DE 202009003543 U
(71) Anmelder: Ollendorf, Hans-Joachim, 39517 Brunkau (DE)
(72) Erfinder: Ollendorf, Hans-Joachim, 39517 Brunkau (DE)
(74) Vertreter: Leinung, Günter

(57) **Zusammenfassung**

Die Erfindung betrifft eine Aufnahmeeinheit für ein Video-Zentriersystem zur Ermittlung von Zentrierdaten für die Einarbeitung optischer Gläser in Brillenfassungen, bestehend aus einer Hubsäule 1, welche Träger einer Videokamera 2 ist, die Videokamera 2 sowie gegebenenfalls die Hubsäule 1 vertikal verstellbar sind und die Hubsäule 1 mit einem Bodenteil ausgebildet ist, wobei die Videokamera 2 führend in der Hubsäule 1 angeordnet ist, im Inneren der Hubsäule 1 eine profilierte fahrstuhlschachtartige Hubeinrichtung 4 eingebunden ist und das Bodenteil als ein gewölbt gestalteter, einen Freiraum/Hohlraum 5 bildender Standfuß 3 mit zugeordneten Stützbleche ausgebildet ist.

## Beschreibung

Die Erfindung betrifft eine Aufnahmeeinheit für ein Video-Zentriergerät zur Ermittlung von Zentrierdaten für die Einarbeitung optischer Gläser in Brillenfassungen.

Video-Zentriersysteme mit den zugehörigen Einrichtungen zur Ermittlung von Zentrierdaten werden benötigt, um das Einschleifen der Brillengläser durch den Brillenglasrandschleifautomaten zu steuern und sind in unterschiedlichen Ausführungsvarianten bekannt.
Allgemein dienen derartige Video-Zentriergeräte zur Kundenberatung in Fachgeschäften und werden von einem Augenoptiker benötigt, welcher einem Kunden eine neue Brille anpassen will. So ist es üblich, dass unter den verschiedenen Parametern, die angepasst werden müssen, um die Brillengläser korrekt in das Gestell der neuen Brille einzupassen und die optischen Zentren der Gläser mit den visuellen Achsen der entsprechenden Augen in Deckung zu bringen, um den Pupillenabstand und die Höhe der Pupillen im Verhältnis zu dem jeweiligen Brillengestell zu ermitteln. Dabei ist es ebenfalls wichtig, die Höhe der optischen Zentren der Gläser im Verhältnis zu dem unteren oder oberen Rand des Brillengestells, in welches sie eingesetzt werden sollen, zu messen.

Die ganz alltägliche Verfahrensweise des Brillenoptikers und damit der allgemein geläufige Stand der Technik bestehen darin, dass sich Optiker und Kunde gegenübersitzen, der Kunde die Fassung seiner Wahl, mit der Glasscheibe darin, aufgesetzt hat. Der Kunde wird dann gebeten, "in die Ferne zu blicken" und der Optiker zeichnet nach Augenschein auf der Scheibe oder auf einer Kontaktstrichfolie mit einem Kreuz den Durchblickspunkt an, wie er ihn beim gegenseitigen Anblick erkennt. Das Zentrierkreuz bestimmt dann die Lage des optischen Mittelpunktes des in die Brillenfassung einzusetzenden Brillenglases.
Dieser Vorgang wird für jedes Auge einzeln vorgenommen, somit monokular und so erhält man, gewissermaßen empirisch, den Pupillenabstand, jedoch einschließlich aller möglichen Ungenauigkeiten durch Paralaxe, Anzeichnungsfehler und weiteren.

Es wurde daher mit der DE 100 33 983 A1 eine Einrichtung zur Bestimmung der Brillenglas-Zentrierdaten vorgeschlagen, bei der die Einrichtung zur Bestimmung der Brillenglas-Zentrierdaten mit einem mittels einer Hubsäule höhenverstellbaren Gehäuse, das eine digitale Videokamera trägt, deren Objektiv zusammen mit einem Spiegel und einer Lichtquelle im Bereich der Frontfläche des Gehäuses angeordnet ist. Ferner ist die Videokamera mit einem Digitalcomputer verbunden. Der Kunde muss nun an einer markierten Stelle, vorzugsweise in etwa 3 m Entfernung, vor dem Spiegel mit dem aufgesetzten Brillengestell Aufstellung nehmen und in dieser Position wird über die Videokamera eine Aufnahme erstellt. Dieses Bild findet Einfluss in einem Computer und bildet eine Grundlage zur Bestimmung der notwendigen Zentrierdaten.

Eine Vorrichtung zum Messen der zur Anpassung optischer Gläser an ein Brillengestell notwendigen Parameter, insbesondere des Pupillenabstandes und der Höhe der Pupillen einer Person in Bezug auf das anzupassende Brillengestell beschreibt die DE 43 23 384 C2, welche mit einer Kamera mit Objektiv, die zur Aufnahme des Kopfes der das Brillengestell tragenden Person bestimmt und gegenüber dem Kopf ausrichtbar ist, ausgebildet ist, ferner mit einer elektronischen Bildverarbeitung zum Bestimmen der Parameter aus der Aufnahme des Kopfes bei einem bestimmten Messabstand zwischen Kopf und Kamera und ferner mit einem die Kamera integrierten optischen Koinzidenzentfernungsmesser, der ein dem Objekt der Kamera nach geordnetes optisches System zur Aufstellung der Ausbildung in vier nebeneinander liegende Bilder oder Teilbilder aufweist, besteht, dies derart, dass der richtige Messabstand erreicht ist, wenn sich die Bilder oder Teilbilder zu einem einzigen Bild zusammenfügen.

Grundlage für die Bestimmung der entsprechenden Parameter bilden neben den notwendigen Einrichtungen/Vorrichtungen Verfahren zur Ermittlung von Zentrierdaten, die notwendig sind, um optische Gläser in eine Brillenfassung einarbeiten zu können. Hier sei auf das Verfahren zur Ermittlung der realen Lage des Pupillenzentrums eines Auges im Verhältnis zum Brillengestell verwiesen, welches mit der FR-26 90 832 A1 bekannt geworden ist.

Ein gattungsgemäßes Verfahren zur Ermittlung von Zentrierdaten für optische Gläser ist in der DE 101 25 050 B4 beschrieben, bei dem gleichfalls digitale Aufnahmen eines Kunden mit angepasster Brillenfassung vorgenommen und auf einem Bildschirm angezeigt werden. Die Bilder werden auf den Bildschirm mit verschiebbaren Rasterlinien und Punkten überzogen, welche zur Bestimmung der Einschleiiparameter des einzusetzenden Brillenglases in ein Gestell genutzt werden.

Nachteilig bei dem Verfahren und den bekannten Vorrichtungen ist, dass sowohl das Verfahren und die Methoden zur Bestimmung von Zentrierdaten als auch die dazu erforderlichen Vorrichtungen und Geräte in ihrem Aufbau und in ihrer Bedienbarkeit sehr aufwändig und kompliziert sind, es somit eines hohen technischen und finanziellen Aufwandes bedarf, um diese Verfahren in Vorrichtungen umzusetzen und anwenden zu können.

Der vorliegenden Erfindung liegt daher die Aufgabe zugrunde, eine Aufnahmeeinheit für ein Video-Zentriersystem derart weiterzuentwickeln, welches als Arbeitsgerät für einen Augenoptiker leicht anwend- und benutzbar ist und sich durch einfache Bedienung und kostengünstiger Herstellung auszeichnet.

Erfindungsgemäß wird diese Aufgabe mit den kennzeichnenden Merkmalen des Anspruches 1 gelöst und vorteilhafte Lösungen und besondere Ausführungsvarianten sind in den Unteransprüchen angegeben.

Die vorgestellte Aufnahmeeinheit dient zur optischen Erfassung einer Brillenfassung sowie zur optischen Erfassung der Lage der Brillenfassung zum Kopf eines Brillenträgers sowie zur Erfassung der Haltung des Kopfes des Brillenträgers während des Zeitpunktes der Messung.
So bezieht sich die vorgestellte Lösung auf eine Aufnahmeeinheit zur optischen Aufnahme und Überleitung auf ein Video-Zentriersystem, mit der die Abspeicherung der aufgenommenen Bilder vom Brillenträger mit seiner vom Augenoptiker anatomisch gut angepassten Brillenfassung sowie zur gleichzeitigen Abspeicherung zur Kopfhaltung des Brillenträgers zum Zeitpunkt der Bildaufnahmen erfolgt. Die aufgenommenen und abgespeicherten Bildinformationen sowie die dazugehörigen Kopfhaltungswerte werden, wie bereits oben ausgeführt, in eine Video-Zentriersystem eingelesen und von diesem softwaretechnisch ausgewertet.

Die mittels des Video-Zentriersystems ermittelten Werte einer Brillenfassung wie Scheibenlänge, Scheibenhöhe, Abstand zwischen den Gläsern, Vorneigungswinkel, Fassungsscheibenwinkel, Hornhautscheitelabstand sowie weiterer Werte, die aus der Auswertung der dazugehörigen Kopfhaltung ermittelt werden, ermöglichen zum ersten dem Augenoptiker die erforderlichen Einschleifwerte für die Brillengläser sehr genau zu ermitteln und zum zweiten den Brillenglashersteller kundenspezifische und individualisierte Brillengläser herzustellen.

So werden mit der vorgestellten Lösung in Auswertung der durch die Aufnahmeeinheit erstellten Bilder und den daraus abgeleiteten Zentrierdaten Größen ermittelt, die für die Einarbeitungen von Brillengläsern in Brillenfassungen von Bedeutung sind. Gleichzeitig werden die zur designgerechten Anpassung am Probanden/ Klienten notwendigen Werte der Brillengläser in Verbindung mit der Brillenfassung bestimmt. Dies erfolgt über eine optische Kopplung über an der Aufnahmeeinheit vorgesehenen Kamera, mittels denen die aufgenommenen Bilder erfasst und dem Video-Zentriersystem zugeführt werden, in diesem erfolgt somit eine automatische Auswertung der bzw. des aufgenommenen Bildes.

So wurde eine Aufnahmeeinheit geschaffen, welche als eine Hubsäule ausgebildet ist, an der eine vertikal verstellbare befestigte oder befestigbare Videokamera angeordnet ist.
Die Hubsäule selbst ist gleichfalls höhenverstellbar und mit einem Bodenteil in Form eines Standfußes ausgebildet, welcher eine gewölbt gestaltete Form besitzt, somit ein Hohlraum/Freiraum zwischen der Hubsäule und der Standfläche der Hubsäule herausgebildet wird, indem die funktionswesentlichen Baugruppen für die Verstellung der Videokamera und auch der Höhenverstellung der Hubsäule sowie die Informations- und energieübertragenden Funktionselemente Aufnahme finden. Innerhalb der Hubsäule ist die Hubsäule mit Gleitschienen ausgebildet, in denen eine profilierte fahrstuhlschachtartige Hubeinrichtung eingebunden ist, welche aus einer Gleitschiene, einem Laufwagen mit motorgetriebener Antriebseinheit und Schleppkette ausgebildet ist. Die Schleppkette dient dabei zur beweglichen Aufnahme von informations-und energieübertragenden Funktionselementen wie Kabeln oder Drähten.

Zur Erfindung gehört auch, dass der Laufwagen der Hubeinrichtung mit einem Haltewinkel zur Aufnahme der Videokamera ausgebildet und diese gegebenenfalls auswechselbar auf dem Haltewinkel angeordnet ist.

Gleichfalls zur Erfindung gehört, dass im Inneren vom Standfuß, den Freiraum zwischen der Hubsäule und ihrer Standfläche die Antriebsmotortechnik sowie die systemimmanenten elektronischen Baugruppen angeordnet sind und dem Standfuß der Hubsäule ansteckbare und/oder anschraubbare Stützbleche zuordbar sind, wodurch die Standsicherheit der gesamten Aufnahmeeinheit signifikant erhöht wird.

Zur Erfindung gehört gleichfalls, dass die am Haltewinkel der Hubeinrichtung befestigte Videokamera derart angeordnet ist, dass die Videokamera in ihrer Blickrichtung senkrecht zur Hubeinrichtung, somit parallel zur Aufstellfläche der Hubsäule und waagerecht zur Raumachse ausgerichtet ist, was ermöglicht wird durch die Verstellbarkeit der Videokamera oder über die Möglichkeit der Höhenverstellung der Hubsäule. Die Höhenverstellbarkeit der Hubsäule begründet die Vorteile der vorgestellten Aufnahmeeinheit, da diese für einen Steharbeitsplatz oder auch für einen Sitzarbeitsplatz eines Optikers verwendet werden kann. So wird die Hubsäule in den erforderlichen Bereichen, wenn diese für einen Steharbeitsplatz oder einen Sitzarbeitsplatz verwendet wird, aufgestellt, um vom Probanden die entsprechenden Videoaufnahmen erstellen zu können.

So kann die Hubsäule vorteilhafterweise bei Verwendung zu einem Steharbeitsplatz mit einer Bordhöhe von beispielsweise 1,10 m durch ihre Höhenveränderungen oder Höhenausführung von beispielsweise 95 cm auf eine Gesamthöhe von über 2 m angewendet werden. Bei der Verwendung in einem Sitzarbeitsplatzbereich mit einer Tischhöhe von beispielsweise 0,7 m kann durch eine Höhenveränderung oder eine Höhenausführung von beispielsweise 1,35 cm gleichfalls eine Gesamthöhe von über 2 m erreicht werden, somit ein ausreichender Höhenverstellspielraum der Videokamera gegeben ist, so dass diese Aufnahmeeinheit bei Probanden unterschiedlicher Größenordnungen einsetzbar ist, so dass durch die gegebenenfalls mögliche Verstellbarkeit der Hubsäule und der Veränderung der Höhe der Videokamera die für Videozentriergeräte notwendigen Videobildaufnahmen der Probanden bei horizontaler Aufnahmerichtung der Videokamera in Augenhöhe des Probanden erreicht werden.
Der Brillenträger, der Proband, steht mit der angepassten Brillenfassung in einem bestimmten Abstand zum Optikerarbeitsplatz, die höhenverstellbare Videokamera wird auf das Gesicht des Probanden gebracht und dann die entsprechenden Videoaufnahmen angefertigt.

Die weiteren Arbeitsschritte für die präzise Auswertung erfolgen dann über das Videozentriersystem.
So wird beispielsweise die Vorneigung der Brillenfassung und des Hornhautscheitelabstandes bestimmt. Dazu zählen ferner die Lage der Pupillenmitten zur Brillenfassung, die Ausgabe der Zentrierdaten nach der Augendrehpunktforderung als auch der Zentrierdaten nach der Sehfeldforderung bei Mehrstärkengläsern und Gleitsichtgläsern, wobei die Umrechnung prismatischer Wirkungen in dieses Zentrierdatensystem eingebunden sind und ausgegeben werden.

Mit nachfolgendem Ausführungsbeispiel soll die Erfindung näher erläutert werden.

### Die beigefügte Zeichnung zeigt in

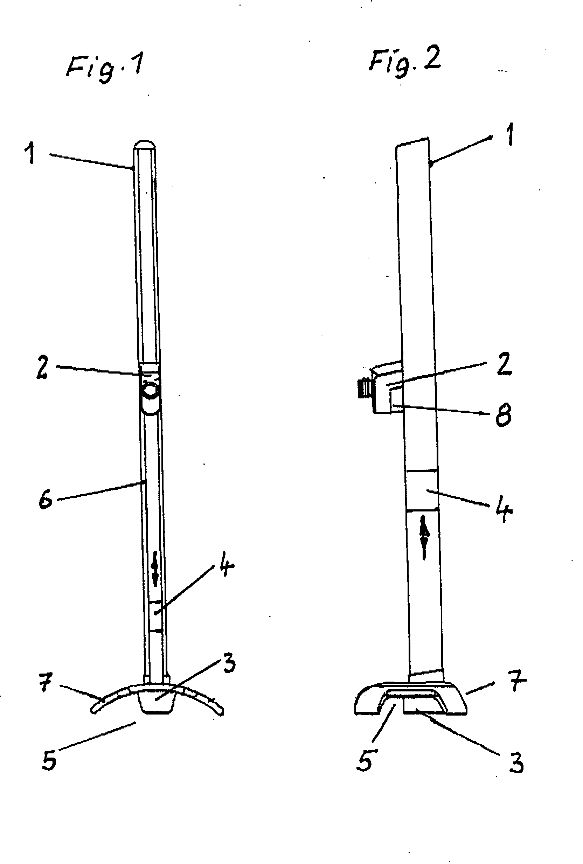

- Figur 1:: eine Frontansicht der Aufnahmeeinheit und
- Figur 2:: eine Seitenansicht nach Figur 1, linksgedreht.

Wie aus den beigefügten Zeichnungen hervorgeht, besteht die geschaffene Aufnahmeeinheit aus einer Hubsäule 1, welche mit einem festgelegten oder variierbaren Höhenmaß, erzielbar durch vertikale Verstellung der Hubsäule, ausgebildet ist, in der eine Videokamera 2 führend und gleichfalls in vertikaler Richtung verfahrbar innerhalb der Hubsäule 1 angeordnet ist. Im Bereich der Standfläche der Hubsäule 1 ist diese mit einem besonders gestalteten Standfuß 3 ausgebildet, dies in der Art, dass zum Standfuß 3 Standbleche 7 angeordnet sind, die mit dem Standfuß einen Freiraum 5 zwischen dem Standfuß 3 und den Standblechen 7 zur Aufstandsfläche der Aufnahmeeinheit herausbilden. Innerhalb der Hubsäule 1 ist eine Hubeinrichtung 4 vertikal verfahrbar angeordnet, welche mit Gleitschienen 6 ausgebildet ist, die in entsprechenden Gegenstücken der Hubsäule 1 geführt sind und so ein sicheres und genaues Verfahren in vertikaler Richtung gegeben ist.
Die Hubeinrichtung 4 besteht aus einem Laufwagen mit motorgetriebener Antriebseinheit und einer Schleppkette zur beweglichen Aufnahme von Informations- und energieübertragenden Funktionselementen wie Kabeln oder Drähten, die sowohl für die Funktion der Hubeinrichtung 4 als auch für die Funktion der in der Hubsäule 1 geführten Videokamera 2 notwendig sind.

Zur Aufnahme der Videokamera 2 ist der Laufwagen der Hubeinrichtung mit einem besonders gestalteten Haltewinkel 8 ausgebildet, zu dem die Videokamera 2 gegebenenfalls auswechselbar befestigt ist.
Die Videokamera 2 ist derart angeordnet, dass die Videokamera 2 in ihrer Blickrichtung senkrecht zur Hubrichtung 4 der Aufnahmeeinheit und somit parallel zur Aufstellfläche der Hubsäule 1 und waagerecht zur Raumachse ausgerichtet ist. Diese Anordnung der Videokamera 2 ermöglicht somit exakte und genaue Videoaufnahmen, die dem Video-zentriersystem zugeführt und von diesem ausgewertet werden, die für die Bestimmung der anzupassenden Brille, insbesondere des Einsatzes und der Anordnung der Brillengläser in der jeweiligen Brillenfassung von besonderen Vorteil sind.
Neben der vertikalen Verstellung der in der Hubsäule 1 vorgesehenen Videokamera 2 über die motorangetriebene Hubeinrichtung 4 kann die vertikale Verstellung auch per Hand vom Bedienenden der Aufnahmeeinheit angesteuert werden, so dass hier vom Bedienenden lediglich der entsprechende Antrieb per Knopf oder Tastendruck betätigt werden muss, um die Videokamera 2 vertikal nach unten der oben zu verfahren, was unbedingt erforderlich ist, um die entsprechende Position der Videokamera 2 zu den Augen des Probanden zu erreichen. Die Videoaufnahmen erfolgen ohne Beeinflussung des Probanden, welcher in einem bestimmten Abstand vor der Aufnahmeeinheit steht.

## Patentansprüche

1. Aufnahmeeinheit für ein Video-Zentriersystem zur Ermittlung von Zentrierdaten für die Einarbeitung optischer Gläser in Brillenfassungen, bestehend aus einer Hubsäule (1), welche Träger einer Videokamera (2) ist, die Videokamera (2) ist vertikal verstellbar und die Hubsäule (1) ist vertikal verstellbar sind und die Hubsäule (1) ist mit einem Bodenteil ausgebildet, wobei die Videokamera (2) führend in der Hubsäule (1) angeordnet ist, im Inneren der Hubsäule (1) eine profilierte fahrstuhlschachtartige Hubeinrichtung (4) eingebunden ist und das Bodenteil als ein gewölbt gestalteter, einen Freiraum/Hohlraum (5) bildender Standfuß (3) mit zugeordneten Stützblechen (7) ausgebildet ist.

2. Aufnahmeeinheit nach Anspruch 1, **dadurch gekennzeichnet, dass**
die Hubsäule (1) mit einem bestimmten, festgelegten, Höhenmaß oder höhenverstellbar ausgebildet ist.

3. Aufnahmeeinheit nach den Ansprüchen 1 und 2 **dadurch gekennzeichnet, dass**
die Hubeinrichtung (4) mit Gleitschienen (6), einem Laufwagen mit motorgetriebener Antriebseinheit und einer Schleppkette zur beweglichen Aufnahme von informations- und energieübertragenden Funktionselementen wie Kabel und/oder Drähten ausgebildet ist.

4. Aufnahmeeinheit nach den Ansprüchen 1 bis 3, **dadurch gekennzeichnet, dass**
dem Laufwagen ein Haltewinkel (8) zugeordnet ist, zu dem die Videokamera (2) gegebenenfalls auswechselbar befestigt ist.

5. Aufnahmeeinheit nach den Ansprüchen 3 und 4, **dadurch gekennzeichnet, dass**
die am Haltewinkel (8) befestigte Videokamera (2) derart angeordnet ist, dass die Videokamera (2) in ihrer Blickrichtung senkrecht zur Hubeinrichtung (4), somit parallel zur Aufstellfläche der Hubsäule (1) und waagerecht zur Raumachse ausgerichtet ist.

6. Aufnahmeeinheit nach den Ansprüchen 1 und 5, **dadurch gekennzeichnet, dass**
im Inneren vom Standfuß (3) die Antriebsmotortechnik sowie die systemimmanenten elektronischen Baugruppen angeordnet sind.

7. Aufnahmeeinheit nach den Ansprüchen 1 und 6, **dadurch gekennzeichnet, dass**
dem Standfuß (3), die Standsicherzeit der Aufnahmeeinheit signifikant erhöhend, ansteckbare und/oder anschraubbare Stützbleche (7) zuordbar sind.

8. Aufnahmeeinheit nach Anspruch 1, **dadurch gekennzeichnet, dass**
die Hubsäule (1) auf einem Steharbeitsplatz mit Bordhöhe von beispielsweise 1,10 m durch Höhenveränderung oder eine Höhenausführung von beispielsweise 95 cm auf eine Gesamthöhe von 2 m und auf einem Sitzarbeitsplatz mit einer Tischhöhe von beispielsweise 0,7 m durch eine Höhenveränderung oder eine Höhenausführung von beispielsweise 135 cm auf eine Gesamthöhe von über 2 m verstellbar ist.

9. Aufnahmeeinheit nach den Ansprüchen 1 bis 8, **dadurch gekennzeichnet, dass**
durch die Veränderung der Höhe der Videokamera (2) die für Video-Zentriergeräte notwendigen Video-Bildaufnahmen vom Probanden bei horizontaler Aufnahmerichtung der Videokamera (2) und in Augenhöhe des Probanden erstellt werden.
